# EUROPÄISCHE PATENTSCHRIFT

(11) **EP 0 759 392 B1**
(45) Veröffentlichungstag und Bekanntmachung des Hinweises auf die Patenterteilung: **31.10.2001**
(21) Anmeldenummer: 96112409.6
(22) Anmeldetag: 01.08.1996
(51) Int. Cl.: B62D 55/15, B62D 55/096

(54) **Laufrolle für Raupenketten**
Roller for endless tracks
Galet pour chenilles

(30) Priorität: 05.08.1995 DE 19528837
(43) Veröffentlichungstag der Anmeldung: 26.02.1997
(73) Patentinhaber: Intertractor GmbH, 58273 Gevelsberg (DE); IAMT Ingenieurgesellschaft für allgemeine Maschinentechnik mbH, 08525 Plauen (Vogtland) (DE)
(72) Erfinder: Ketting, Michael, Dr., 58256 Ennepetal (DE); Humbek, Holger, 44803 Bochum (DE); Slowak, Thorsten, 44869 Bochum (DE); Heyer, Frank, 58300 Wetter (DE); Becker, Harald, 46049 Oberhausen (DE); Stauch, Matthias, 99842 Ruhla (DE); Fröhner, Frank, 08485 Lengenfeld (DE); Holzapfel, Heiko, 14974 Ludwigsfelde (DE)
(74) Vertreter: Köchling, Conrad, Dipl.-Ing.

(56) Entgegenhaltungen:
- WO-A-89/05921
- DE-A- 4 121 912
- DE-B- 2 400 849
- DE-C- 331 467
- DE-U- 6 924 259
- DE-U- 8 900 576
- FR-A- 1 566 879
- US-A- 3 578 822
- US-A- 3 929 385
- US-A- 3 980 149
- PATENT ABSTRACTS OF JAPAN vol. 10, no. 204 (M-499), 17.Juli 1986 & JP 61 046771 A (HITACHI), 7.März 1986,

## Beschreibung

Die Erfindung betrifft eine Laufrolle für Raupenketten oder dergleichen endlos umlaufende Bänder oder Ketten, bestehend aus einem Laufrollenkörper, einer diesen durchgreifenden Achse sowie zwischen Laufrollenkörper und Achse angeordneten Lagern und Dichtungen, wobei die Achse mit ihren axial aus dem Laufrollenkörper vorragenden Enden gestellfest gehaltert ist.

Derartige Laufrollen sind beispielsweise aus der DE 69 24 259 U1 bzw. der DE 37 10 104 C2 bekannt.

Bei der bestimmungsgemäßen Benutzung solcher Laufrollen treten erhebliche Belastungen auf, die zu einer Durchbiegung der Achse und/oder des Laufrollenkörpers führen. Hieraus resultiert ein hoher Verschleiß der Lager, die zwischen Laufrollenkörper und Achse bzw. zwischen den Wellenstummeln und den Endkappen angeordnet sind. Die üblicherweise als Lagerbuchsen ausgebildeten Lager verschleißen besonders schnell an den Kanten, an denen überhöhte Beanspruchungen auftreten, wenn durch Verformungen oder Toleranzen die Mittellinie von Lagerbuchse und Achse nicht koaxial zueinander gerichtet sind. Leichte Verformungen treten im praktischen Betrieb ständig auf, so dass die entsprechenden Lager ständig ungleichmäßig beansprucht bzw. lokal überbeansprucht werden.

Aus der US-A-3929385 ist eine Laufrolle für Raupenketten oder dergleichen umlaufende Bänder oder Ketten bekannt, die aus einem Laufrollenkörper, einer diesen durchgreifenden Achse sowie zwischen Laufrollenkörper und Achse angeordneten Lagern und Dichtungen besteht. Dabei besteht der auf Achsen gelagerte Laufrollenkörper aus zwei Teilkörpern, die mit axialem Abstand voneinander angeordnet sind. Hierbei sind zwei Laufrollen vorgesehen, die jeweils auf einem Achsstummel angeordnet sind. Der jeweilige Achsstummel ist nur mit seinem einen Ende über eine Stütze gestellfest gehaltert, während das andere Ende der Achsstummel frei ist und nicht an gestellfesten Teilen gelagert ist. Eine derartige Ausbildung führt zu den oben beschriebenen Problemen und Nachteilen.

Ausgehend von diesem Stand der Technik liegt der Erfindung die Aufgabe zugrunde, einem Versagen der Laufrollen durch Ausfall der Lager entgegenzuwirken, insbesondere einem Verschleiß, einer Überlastung und einer Kantenbelastung der Lager entgegenzuwirken.

Zur Lösung der Aufgabe wird vorgeschlagen, dass der auf der Achse gelagerte Laufrollenkörper aus zwei Teilkörpern besteht, die mit axialem Abstand voneinander angeordnet sind, wobei die Achsen im zwischen den Teilkörpern befindlichen Mittelteil eine gestellfest gehaltene Stütze aufweist. Dabei ist vorzugsweise vorgesehen, dass als Lagerelemente zwischen den Teilkörpern und der Achse Gleitlager angeordnet sind.

Desweiteren kann vorzugsweise vorgesehen sein, dass beide Teilkörper an beiden axialen Enden mit Dichtungen versehen sind, die zwischen den Stirnflächen der Teilkörper und den Stirnflächen der gestellfesten Mittelstütze bzw. den gestellfesten Endstützen angeordnet sind.

Bei einer solchen Ausführungsform ist der Laufrollenkörper nicht mehr einteilig, sondern besteht aus zwei symmetrischen, vorzugsweise gleichen Halbteilen. Die so gebildeten Teilkörper der Rolle sind vorzugsweise über Gleitlager auf der Achse gelagert. Die Befestigung am Gestellrahmen erfolgt über Endstücke, in denen die Achsstummel gehaltert sind, sowie über eine Mittelstütze, in der ebenfalls die Achse gehaltert ist. Bei einer Ausbildung, bei der der Laufrollenkörper mit Wellenstummeln an seinen Enden in Endkappen drehbar gelagert ist, kann ebenfalls diese zweiteilige Ausbildung des Laufrollenkörpers erfolgen, wobei dann im Mittelbereich zwischen den beiden Teilkörpern eine zusätzliche gestellfeste Lagerstelle gebildet ist. Im Prinzip können dabei die Lagerteilkörper jeweils an beiden Stirnenden Wellenstummel aufweisen, die in entsprechen Endkappen bzw. in einer Mittelkappe drehbar gelagert sind. Durch diese Ausbildung erfolgt eine zusätzliche Abstützung in der Mitte der Laufrolle, wobei in diesem mittleren Trennbereich zusätzliche Dichtungen erforderlich sind. Durch die so gebildeten drei Auflagerpunkte teilt sich die Last auf. Die kurzen Hebelarme führen zu geringen Verformungen und kleineren Biegemomenten. Achse, Endstücke, Laufrollenkörper, Schraubverbindungen und Lager werden dadurch weniger beansprucht.

Eine alternative Lösung der Aufgabe wird darin gesehen, dass der mit Wellenstummeln an seinen Enden versehene Laufrollenkörper mittig geteilt und mit Wellenstummeln versehen ist, wobei die mittigen Wellenstummel in einer gestellfesten mittleren Doppelkappe drehbar gelagert sind.

Die Vorteile sind vorstehend schon beschrieben.

Eine weitere alternative Lösung der Aufgabe wird darin gesehen, dass für jede Kettenseite jeweils separate Teillaufrollen angeordnet sind, wobei die Teillaufrollen der einen Kettenseite seitlichen Abstand von den Teillaufrollen der anderen Kettenseite aufweisen und die Teillaufrollen der einen Kettenseite entweder koaxial zu den Teillaufrollen der anderen Kettenseite ausgerichtet oder in Laufrichtung der Kette zueinander versetzt achsparallel zueinander angeordnet sind.

Dabei ist vorzugsweise vorgesehen, dass jede Teillaufrolle zwei Spurkränze aufweist und die Lager zwei Anschlagflächen zur Aufnahme der axialen Kräfte der Teillaufrolle aufweisen.

Alternativ kann auch vorgesehen sein, dass jede Teillaufrolle nur einen Spurkranz aufweist und das Lager entsprechend nur eine Anschlagfläche zur Aufnahme der axialen Kräfte aufweist.

Bei diesen Ausführungsformen besitzt der Rollenkörper jeweils nur eine Lauffläche für eine Kettenseite. Die entsprechenden Teillaufrollen müssen daher nebeneinander (koaxial zueinander) oder auch in Fahrtrichtung versetzt angeordnet werden, wobei sie entlang der Spurkanten einer Kette oder dergleichen rechts- bzw. linksseitig der Kette angeordnet sind.

Sofern jede Teillaufrolle zwei Spurkränze aufweist, hat das entsprechende Gleitlager zwei entsprechende Anlaufflächen, um die Axialkräfte abzustützen. Sofern nur ein Spurkranz an jeder Teillaufrolle vorgesehen ist, treten Axialkräfte nur in einer Richtung auf, so dass eine axiale Lagerfläche ausreichend ist. Durch die kurze Achsausbildung sind Verformungen und Biegemomente gering. Die Belastungen für Achsen, Endstücke, Schrauben und Gleitlager sind hierdurch erheblich gemindert.

Ausführungsformen der Erfindung sind in der Zeichnung dargestellt und im Folgenden näher beschrieben.

Es zeigt:
- Figur 1: eine Ausführungsform einer Laufrolle im Mittel-/Längsschnitt gesehen;
- Figur 2 und 3: weitere Ausführungsformen in gleicher Ansicht.

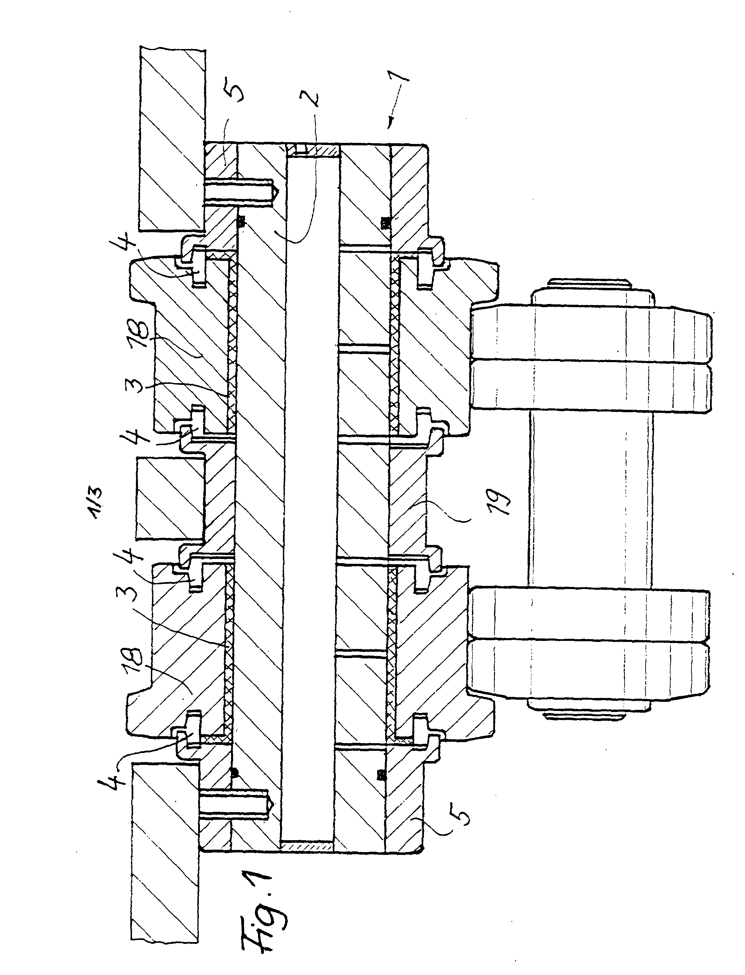

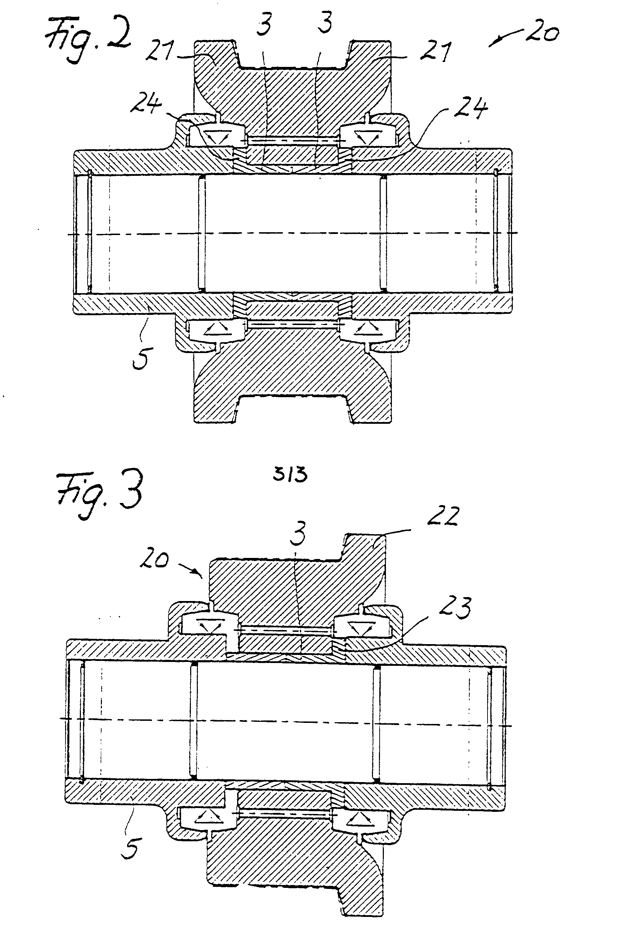

Die Zeichnungsfiguren zeigen die Laufrollen in Einbaulage. Die Figur 2 zeigt die Laufrolle umgedreht zur Einbaulage (oben und unten vertauscht).

In den Figuren ist eine Laufrolle für Raupenketten oder dergleichen endlos umlaufende Bänder oder Ketten gezeigt. Sie besteht aus einem Laufrollenkörper 1, einer diesen durchgreifenden Achse 2, sowie zwischen Laufrollenkörper 1 und Achse 2 angeordneten Lagern 3 und Dichtungen 4. Auf die axial aus dem Laufrollenkörper 1 herausragenden Enden der Achse 2 sind Endstücke 5 befestigt und mit Spannstiften verbunden, die gestellfest an Teilen des Fahrgestells oder dergleichen fixiert sind. Eine solche Laufrolle ist in Figur 1 gezeigt. Bei dieser Ausführungsform besteht der auf der Achse 2 gelagerte Laufrollenkörper 1 aus zwei Teilkörpern 18, die mit axialem Abstand voneinander angeordnet sind. Die Achse 2 weist in dem zwischen den Teilkörpern 18 gebildeten Spalt mittig eine gestellfest gehaltene Stütze 19 auf. Als Lagerelemente 3 sind dabei zwischen den Teilkörpern 18 und der Achse 2 Gleitlager angeordnet. Beide Teilkörper 18 sind an beiden axialen Enden mit Dichtungen 4 versehen, die zwischen den Stirnflächen der Teilkörper 18 und den Stirnflächen der Mittelstütze 19, bzw. den Endstücken 5 angeordnet sind. Durch die hierbei erzeugten drei gestellfesten Auflagerpunkte teilt sich die Last auf. Die kurzen Hebelarme führen einerseits zu geringen Verformungen und andererseits zu kleinen Biegemomenten. Die entsprechenden Elemente werden dadurch weniger beansprucht.

Bei der Ausführungsform nach Figur 2 und 3 ist für jede Kettenseite (rechts und Links der Laufrichtung gesehen) jeweils eine separate Teillaufrolle 20 angeordnet. Die Teillaufrollen der jeweils einen Kettenseite sind mit seitlichem Abstand von den Teillaufrollen 20 der jeweils anderen Kettenseite angeordnet. Die Teillaufrollen 20 der einen Kettenseite können entweder koaxial zu den Teillaufrollen der anderen Kettenseite ausgerichtet sein oder aber sie können auch in Laufrichtung der Kette zueinander versetzt, achsparallel zueinander angeordnet sein.

Bei der Ausführungsform nach Figur 2 weist die Teillaufrolle 20 zwei Spurkränze 21 auf. Die Lager 3 weisen zwei Anschlagflächen 24 zur Aufnahme der axialen Kräfte der Teillaufrolle 20 auf.

Bei der Teillaufrolle gemäß Figur 3 ist nur ein Spurkranz 22 vorgesehen. Das entsprechende Lager 3 weist folglich nur eine Anschlagfläche 23 zur Aufnahme der axialen Kräfte auf. Die Teillaufrollen 20 bestehen wiederum aus einem Rollenkörper, der von einer Achse durchgriffen ist, wobei zwischen Achse und Rollenkörper das Lager 3 angeordnet ist.

Bei den Ausführungsformen gemäß Figur 2 und 3 haben die Teillaufrollen 20 jeweils nur eine Lauffläche für eine Kettenseite. Die Rollen müssen daher nebeneinander (koaxial) oder in Fahrtrichtung versetzt zueinander angeordnet werden (achsparallel). Durch die kurze Achsausbildung sind Verformungen und Biegemomente gering. Die Belastungen für Achse, Endstücke, Schrauben und Gleitlager sind dadurch geringer.

Mit allen Ausführungsformen wird die Beanspruchbarkeit der Laufrollen erhöht und somit die Lebensdauer verlängert.

## Patentansprüche

1. Laufrolle für Raupenketten oder dergleichen endlos umlaufende Bänder oder Ketten, bestehend aus einem Laufrollenkörper (1), einer diesen durchgreifenden Achse (2) sowie zwischen Laufrollenkörper (1) und Achse (2) angeordneten Lagern (3) und Dichtungen (4), wobei die Achse (2) mit ihren axial aus dem Laufrollenkörper (1) vorragenden Enden gestellfest gehaltert ist, **dadurch gekennzeichnet, daß** der auf der Achse gelagerte Laufrollenkörper (1) aus zwei Teilkörpern (18) besteht, die mit axialem Abstand voneinander angeordnet sind, wobei die Achse (2) im zwischen den Teilkörpern (18) befindlichen Mittelteil eine gestellfest gehaltene Stütze (19) aufweist.

2. Laufrolle nach Anspruch 1, **dadurch**
**gekennzeichnet, daß** als Lagerelemente (3) zwischen den Teilkörpern (18) und der Achse (2) Gleitlager angeordnet sind.

3. Laufrolle nach Anspruch 1 oder 2, **dadurch**
**gekennzeichnet, daß** beide Teilkörper (18) an beiden axialen Enden mit Dichtungen (4) versehen sind, die zwischen den Stirnflächen der Teilkörper (18) und den Stirnflächen der gestellfesten Mittelstütze (19) bzw. den gestellfesten Endstücken (5) angeordnet sind.

4. Laufrolle nach dem Oberbegriff des Anspruches 1,
**dadurch gekennzeichnet, daß** der mit Wellenstummeln (7) an seinen Enden versehene Laufrollenkörper (1) mittig geteilt und mit Wellenstummeln versehen ist, wobei die mittigen Wellenstummel in einer gestell-festen mittleren Doppelkappe drehbar gelagert sind.

5. Laufrolle nach dem Oberbegriff des Anspruches 1,
**dadurch gekennzeichnet, daß** für jede Kettenseite jeweils separate Teillaufrollen (20) angeordnet sind, wobei die Teillaufrollen (20) der einen Kettenseite seitlichen Abstand von den Teillaufrollen (20) der anderen Kettenseite aufweisen und die Teillaufrollen (20) der einen Kettenseite entweder koaxial zu den Teillaufrollen (20) der anderen Kettenseite ausgerichtet oder in Laufrichtung der Kette zueinander versetzt achsparallel zueinander angeordnet sind.

6. Laufrolle nach Anspruch 5, **dadurch**
**gekennzeichnet, daß** jede Teillaufrolle (20) zwei Spurkränze (21) aufweist und die Lager (3) zwei Anschlagflächen (24) zur Aufnahme der axialen Kräfte der Teillaufrolle (20) aufweisen.

7. Laufrolle nach Anspruch 5, **dadurch**
**gekennzeichnet, daß** jede Teillaufrolle (20) nur einen Spurkranz (22) aufweist und das Lager (3) entsprechend nur eine Anschlagfläche (23) zur Aufnahme der axialen Kräfte aufweist.

## Claims

1. A track roller for crawlers or similar endlessly rotating belts or chains, consisting of a track roller body (1), an axle (2) passing therethrough and also bearings (3) and seals (4) disposed between track roller body (1) and axle (2), the axle (2) being retained fixed to the frame with its ends that axially protrude from the track roller body (1),
**characterised in that** the track roller body (1) mounted on the axle consists of two component bodies (18), which are axially spaced from one another, the axle (2) comprising a support (19) retained fixed to the frame in the central part situated between the component bodies (18).

2. A track roller according to Claim 1,
**characterised in that** sliding bearings are disposed as bearing elements between the component bodies (18) and the axle (2).

3. A track roller according to Claim 1 or 2,
**characterised in that** both component bodies (18) are provided at both axial ends with seals (4), which are disposed between the end faces of the component bodies (18) and the end faces of the central support (19) fixed to the frame or respectively the end pieces (5) fixed to the frame.

4. A track roller according to the precharacterising clause of Claim 1,
**characterised in that** the track roller body (1), provided with shaft butt ends (7) at its ends, is centrally divided and provided with shaft butt ends, the central shaft butt ends being pivoted in a central double cap fixed to the frame.

5. A track roller according to the precharacterising clause of Claim 1,
**characterised in that** for each chain side separate component track rollers (20) are provided in each case, the component track rollers (20) of the one chain side being laterally spaced from the component track rollers (20) of the other chain side and the component track rollers (20) of the one chain side being aligned either coaxially to the component track rollers (20) of the other chain side or in the direction of movement of the chain being disposed offset to one another and axially parallel to one another.

6. A track roller according to Claim 5,
**characterised in that** each component track roller (20) comprises two wheel flanges (21) and the bearings (3) comprise two stop faces (24) for absorbing the axial forces of the component track roller (20).

7. A track roller according to Claim 5,
**characterised in that** each component track roller (20) comprises only one wheel flange (22) and the bearing (3) accordingly comprises only one stop face (23) for absorbing the axial forces.

## Revendications

1. Galet de roulement pour chenilles ou bandes ou chaînes fonctionnant sans fin de façon similaire, comprenant un corps de galet de roulement (1), un axe (2) traversant ce corps ainsi que des paliers (3) et joints (4) disposés entre le corps du galet de roulement (1) et l'axe (2), l'axe (2) étant maintenu de façon fixe au bâti avec ses extrémités dépassant dans le sens axial du corps du galet de roulement (1), **caractérisé en ce que** le corps du galet de roulement (1) logé sur l'axe est constitué de deux corps partiels (18), qui sont disposés avec espace axial l'un de l'autre, l'axe (2) présentant un appui (19) maintenu de façon fixe au bâti dans la partie centrale se trouvant entre les corps partiels (18).

2. Galet de roulement selon la revendication 1, **caractérisé en ce que** des paliers à glissement sont disposés comme éléments de palier (3) entre les corps partiels (18) et l'axe (2).

3. Galet de roulement selon la revendication 1 ou 2, **caractérisé en ce que** les deux corps partiels (18) sont pourvus sur leurs deux extrémités axiales de joints (4) qui sont disposés entre les surfaces frontales des corps partiels (18) et les surfaces frontales du support central (19) fixé au bâti et les pièces d'extrémité (5) fixées au bâti.

4. Galet de roulement selon le préambule de la revendication 1, **caractérisé en ce que** le corps du galet de roulement (1) pourvu de bouts d'arbre (7) sur ses extrémités est divisé au milieu et est pourvu de bouts d'arbre, les bouts d'arbres centraux étant logés de façon à pouvoir pivoter dans un double capot central fixé au bâti.

5. Galet de roulement selon le préambule de la revendication 1, **caractérisé en ce que** des galets de roulement partiels (20) séparés sont disposés pour chaque côté de chaîne, les galets de roulement partiels (20) d'un côté de chaîne présentant un espacement latéral par rapport aux galets de roulement partiels (20) par rapport à l'autre côté de chaîne et les galets de roulement partiels (20) d'un côté de chaîne étant disposés de façon parallèle l'un par rapport à l'autre soit orientés sur le même axe que les galets de roulement partiels (20) de l'autre côté de chaîne soit décalés dans le sens de marche de la chaîne les uns par rapport aux autres.

6. Galet de roulement selon la revendication 5, **caractérisé en ce que** chaque galet de roulement partiel (20) présente deux boudins (21) et les paliers (3) présentent deux surfaces de butée (24) pour la réception des forces axiales du galet de roulement (20).

7. Galet de roulement selon la revendication 5, **caractérisé en ce que** chaque galet de roulement partiel (20) présente seulement un boudin (22) et le palier (3) présente en conséquence une seule surface de butée (23) pour la réception des forces axiales.
